# EUROPEAN PATENT APPLICATION

(11) **EP 1 036 642 A1**
(43) Date of publication of application: **20.09.2000**
(21) Application number: 00301263.0
(22) Date of filing: 17.02.2000
(51) Int. Cl.: B29B 17/02, B26D 1/00

(54) **Apparatus for disposal of waste tyres**

(30) Priority: 08.03.1999 JP 5992799
(71) Applicant: Kotobuki Sangyo Kabushiki Kaisha, Sapporo-shi, Hokkaido (JP)
(72) Inventor: Nitta, Yoshiaki, Kitahiroshima-shi, Hokkaido (JP); Kunioku, Hideo, c/oKotobuki Sangyo K.K., Sapporo-shi, Hokkaido (JP)
(74) Representative: Giles, Ashley Simon

(57) **Abstract**

Waste tyres are effectively pulverized into pieces by an apparatus including a rotary drum (7) having a radially protruding arm (9) with a hook (9a), a base frame (1) having a slit (8a) for permitting the arm to pass therethrough, a reaction bearing carrier plate (8) stood upright on the base frame (1) for bringing a waste tyre (10) to be broken into contact therewith, and a geared motor mounted on the base frame (1) to rotate the rotary drum (7). By rotating the rotary drum (7) with the arm (9), the bead wires (12) imbedded in the inner and outer side portions of the waste tyre (10) are caught by the hook (9a) of the arm (9) and successfully drawn out of the waste tyre. The waste tyre (10) free from the bead wires (12) can easily be disposed of to be reused for various purposes.

## Description

This invention relates to an apparatus for disposal of waste tyres, and more particularly to an apparatus capable of extracting bead wires from a waste tyre to facilitate the disposal of the waste tyre.

Waste car tyres created in large quantifies in recent years have presented serious environmental and safety hazards. Some methods for disposing of such waste scrap tyres have been so far come up with according to the needs for discarding the waste tyres. For example, a waste tyre disposal method for discarding waste tyres by burning the tyres has been introduced into a cement manufacturing plant and so forth. There has been proposed another waste tyres disposal method in which the waste tyre is pulverized into pieces by using a tyre cutting device, so that pulverized pieces thus obtained can be reused in architectural, civil engineering and stockbreeding fields. That is, the pulverized pieces of the waste tyre can be used as raw materials of a sound insulating slab for use in a building, paving cushion of a pavement, flooring of a cattle shed or barn and the like. Otherwise, the pulverized pieces of the waste tyres may be discarded by being buried in the ground.

However, the thermal disposal of waste tyres as noted above entails serious environmental pollution problems due to soot and smoke produced by burning the tyres. The method of burning the waste tyres, whether pulverized into pieces or not, has restrictions on the waste disposal landfills where the waste tyres are allowed to be dumped in the ground, but the waste disposal landfills are being gradually narrower by government regulations. After all, there is no alternative but to recycle the waste tyres in the pulverized state for various purposes under these circumstances. Accordingly, it can be said that it is best to pulverize the waste tyres into pieces so as to recycle them.

A motor-vehicle tyre has a number of bead wires imbedded in the inner peripheral portion around the centre hole thereof. The bead wires are generally cut and smashed into pieces while pulverizing the waste tyre by use of a tyre cutting machine. Although use of the tyre cutting machine having a cutting blade suffices for the purpose of cutting elastic material such as tyre rubber, the cutting blade for cutting the tyres is easily worn in a short period of time when cutting tyres with bead wires. Besides, the reuse of the waste tyre necessitates the work of sorting out and removing the smashed bead wires in pieces intermingled with rubber pieces from the shredded tyre. This turns out to be a very troublesome chore. Accordingly, in order to reuse serviceably the shredded waste tyre, it is desirable to extract the bead wires from the waste tyre before shredding it.

The present invention seeks to provide an apparatus capable of easily and quickly removing bead wires from a waste tyre to efficiently dispose of the waste tyre.

The present invention also seeks to provide an apparatus for disposal of waste tyres, which is simple in structure and easy to handle and can be used effectively for easily removing or extracting bead wires from waste tyres.

The present invention also seeks to provide an apparatus for disposal of waste tyres, which is capable of facilitating the work of processing the waste tyres to be reused.

According to the present invention, there is provided an apparatus for disposal of waste tyres, which comprises a rotary drum having a radially protruding arm, a drive means for rotating the drum, a base frame having a slit for permitting the arm to pass therethrough, and a carrier plate for bearing reaction force generated by bringing a waste tyre to be broken into contact therewith. The reaction bearing carrier plate is stood upright on the base frame. The arm is provided at its free end with a hook.

The disposal of a waste tyre by using the apparatus of the invention is fulfilled by inserting the aforementioned hook into the centre hole of the waste tyre firmly held in position, and rotating the rotary drum, consequently to extract the bead wires from the waste tyre imbedded in the inner peripheral portion around the centre hole of the tyre.

Thus, the bead wires can be successfully extracted quickly with the hook being rotated with the rotary drum, thereby to facilitate smashing of the waste tyre into pieces to reuse the tyre. The apparatus of the invention makes it possible to readily dispose of a large quantity of waste tyres at high speed.

One way of carrying out the invention is described in detail below with reference to drawings, which illustrate only one specific embodiment, in which:-

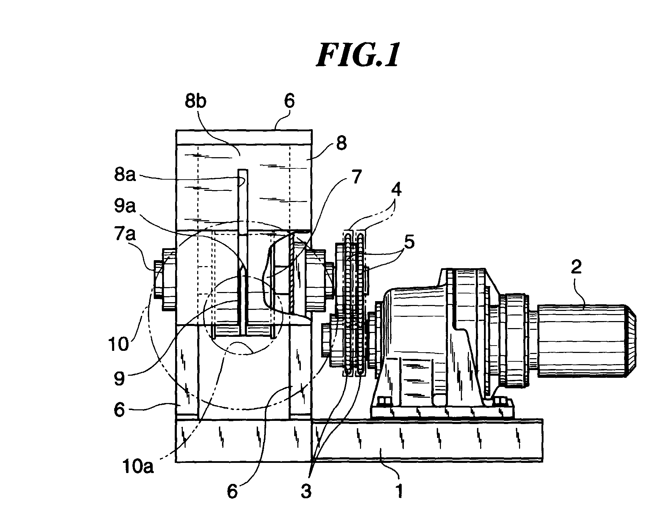

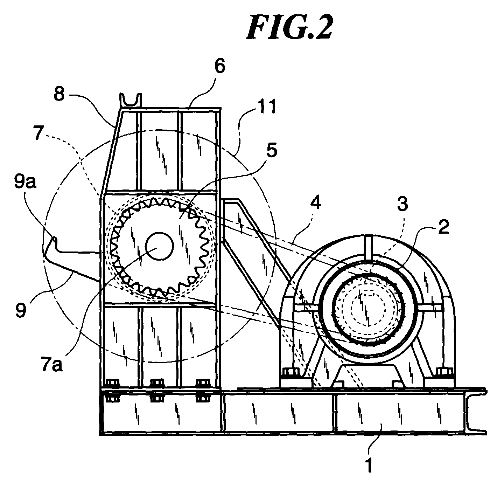

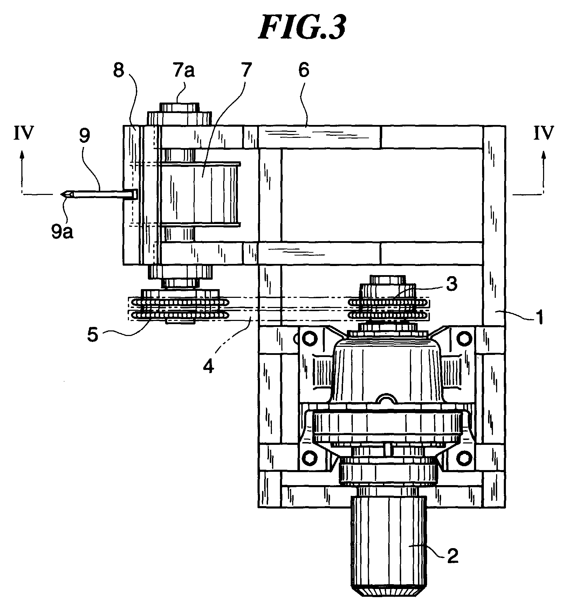

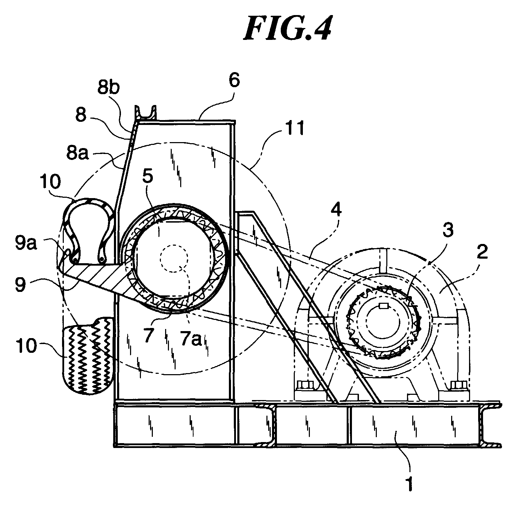

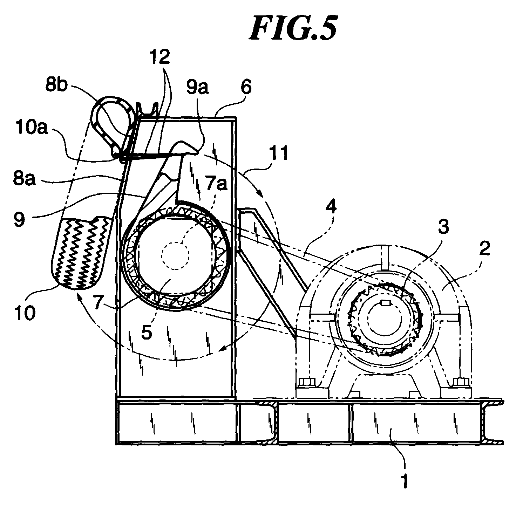

FIG. 1 is a front view showing one embodiment of an apparatus according to this invention; FIG. 2 is a side view showing the apparatus of FIG. 1; FIG. 3 is a plan view showing the apparatus of FIG. 1; FIG. 4 is a sectional view taken on line IV-IV in FIG. 3; and FIG. 5 is an explanatory diagram showing the operating principle of the apparatus of the invention.

One embodiment of the apparatus for disposal of waste tyres according to this invention will be described hereinafter with reference to the accompanying drawings.

As illustrated in FIG. 1 through FIG. 3, a geared motor 2 is mounted on one side portion of a rectangular base frame 1 set on the ground, floor or the like. The geared motor 2 has an output shaft with sprockets 3. On the other side portion of the base frame 1, a double housing type stand frame 6 protruding frontward (leftward in FIG. 3) from the base frame 1 is stood in an upright state. At the upper portion of the stand 6, a rotary drum 7 with a shaft 7a is supported rotatably about the shaft 7a. The shaft 7a is provided at one end thereof (right end in FIG. 1) with sprockets 5 arranged in juxtaposition to the sprockets 3. Between the sprockets 3 and 5, endless chain belts 4 are arranged respectively.

The rotary drum 7 has an arm 9, which extends radially outward from the outer peripheral surface of the rotary drum 7 in the direction perpendicular to the axis of the drum. The arm 9 is provided at its free end with a hook 9a. On the front side (left side in FIG. 2), there is mounted a carrier plate 8 for bearing reaction force generated by bringing a waste tyre 10 to be broken into contact therewith. In the centre portion of the reaction bearing carrier plate 8, there is formed a slit 8a for permitting the arm 9 to pass therethrough. The upper part of the reaction bearing carrier plate 8 is slightly inclined backward (rightward in FIG. 2) to form a slope 8b. The reaction bearing carrier plate 8 assumes a reinforcing pressure-resistant structure for enduring stress produced by bringing the waste tyre 10 into contact therewith.

Next, the operation and function of the waste tyre disposing apparatus according to this invention will be described.

First, the rotating angle of the arm 9 is regulated by controlling the geared motor 2 so as to allow the hook 9a to project frontward through the slit 8a and stop in a substantially horizontal posture as shown in FIG. 1 and FIG. 2. Thereafter, the arm 9 is inserted in the centre hole 10a of the waste tyre 10 as shown by a two-dot chain line in FiG. 1 and a solid line in FIG. 4, to cause the hook 9a to catch the inner peripheral edge of the waste tyre. As a result, the waste tyre is held as being suspended from the arm.

In the state of suspending the waste tyre 10 from the arm, the tyre is in contact with the reaction bearing carrier plate 8, and the hook 9a is positioned outside the bead portion of the outer side part (left side in FIG. 4) of the tyre 10.

Then, the geared motor 2 is operated to rotate the rotary drum 7 through the sprockets 3 and 5 and chain belts 4, to revolve the arm 9 round the drum while passing through the slit 8a from the outer side of the tyre toward the inner part of the tyre as illustrated in FIG. 5. Concurrently, the waste tyre 10 moves along the reaction bearing carrier plate 8 toward the slope 8b. The trajectory 11 swept out by the hook 9a revolving round the rotary drum at that time is described as illustrated in FIG. 5. Accordingly, the waste tyre 10 is torn by the hook 9a, which revolves round the drum and penetrates the tyre from the outer side to the inner side of the tyre. As a result, the bead wires 12 imbedded in the waste tyre 10 are drawn out of the tyre with the hook. The bead wires 12 extracted from the tyre by the hook are introduced through the slit 8a into the base frame 1 on the rear side of the stand 6. When the aim 9 makes one revolution, it returns to the prescribed initial position.

Since the waste tyre 10 from which the bead wires 12 are extracted ultimately falls into the base frame 1 on the front side of the stand 6, it must be taken out promptly from the base frame. Thus, the unboned waste tyre 10 free from the bead wires can easily be broken or smashed into pieces with a cutting machine or the like. The bead wires 12 extracted from the tyre may be taken out from the base frame 1 each time one or several waste tyres are dealt with.

Upon completion of the extraction of the bead wires from the waste tyre, another waste tyre may be dealt with in succession in the same manner as described above. That is, the waste tyre to be newly dealt with is caught by the arm 9 in the initial position, and then, the arm 9 with the hook is revolved around the rotary drum to draw out the bead wires 12 from the inner and outer side portions of the inner periphery of the tyre.

Controlling the geared motor 2 can regulate a torque by which the bead wires 12 are drawn out from the tyre by rotation of the rotary drum with the arm. Accordingly, by properly regulating the torque of the rotation of the rotary drum, the apparatus of the invention makes it possible to completely dispose of a waste tyre of any size, e.g. a waste tyre of large size for a lorry and a waste tyre of small size for a passenger car. That is, the bead wires 12 can be effectively extracted from any waste tyre promptly in a matter of several seconds by use of the apparatus of the invention.

As is described above, according to the present invention, the bead wires imbedded in the waste tyre can be assuredly drawn out of the tyre simultaneously from the inner and outer side portions of the inner periphery of the waste tyre, so that the waste tyre free from the bead wires can be broken into pieces instantly. Consequently, the waste tyres can be properly reused for various purposes with ease. For example, even when pulverizing the waste tyre into pieces by using a tyre cutting machine, the waste tyre free from the bead wires lightens a burden on the tyre cutting machine, thereby to reduce the possibility of damaging the cutting blade of the tyre cutting machine and extend the lifetime of the cutting blade. Thus, the waste tyre disposing apparatus of the invention is conveniently easy to handle and needs less maintenance.

## Claims

1. An apparatus for disposal of waste tyres, comprising a rotary drum (7) having a radially protruding arm (9), said arm (9) being provided at its free end with a hook (9a), a drive means (2) for rotating said rotary drum (7), a base frame (1) having a slit (8a) for permitting said arm to pass therethrough, and a carrier plate (8) for bearing reaction force generated by bringing a waste tyre (10) to be broken into contact therewith, said carrier plate (8) being stood in an upright state on said base frame (1), said hook (9a) of said arm (9) being revolved round said rotary drum (7) to draw out bead wires (12) imbedded in an inner peripheral portion around a centre hole (10a) of said waste tyre (10).

2. An apparatus for disposal of waste tyres according to claim 1, wherein said reaction bearing carrier plate (8) has its upper part slightly inclined backward.

3. An apparatus for disposal of waste tyres according to claim 1 or claim 2, wherein said rotary drum (7) is supported rotatably about a shaft (7a) held by a stand (6), said drive means (2) includes a motor with an output shaft for producing driving power to be transmitted to said rotary drum (7) through sprockets (3) mounted on said output shaft of said motor, sprockets (5) mounted on said shaft of said rotary drum (7) and endless chain belts (4) arranged between said sprockets (3,5) of said output shaft of said motor and said shaft of said rotary drum (7), and said reaction bearing carrier plate (8) is mounted on said stand (6).
